# EUROPEAN PATENT APPLICATION

(11) **EP 4 372 940 A1**
(43) Date of publication of application: **22.05.2024**
(21) Application number: 22208359.4
(22) Date of filing: 18.11.2022
(51) Int. Cl.: H02H 9/00, H02H 9/02, H02H 3/02

(54) **POWER CONTROLLER WITH CURRENT LIMITING FUNCTION FOR PRE-CHARGING**

(71) Applicant: Lilium eAircraft GmbH, 82234 Wessling (DE)
(72) Inventor: Angerer, Martin, 82205 Gilching (DE)
(74) Representative: Grünecker Patent- und Rechtsanwälte PartG mbB

(57) **Abstract**

The present invention relates to a power controller with a current limiting function for pre-charging a capacitive load, wherein current limitation is implemented by means of power transfer modulation control under specific switching conditions. Specifically, by use of resonant circuit elements (resonant tank) and an accordingly adapted modulation controller, a zero-voltage switching condition (ZVS) when modulating the power transfer is achieved. This results in low power dissipation and little electromagnetic interference. Therefore, a capacitive load can be charged faster and with less power dissipation than in conventional approaches.

## Description

### FIELD OF THE INVENTION

The present invention relates to power controllers including a power switch. More specifically, the present invention relates to power controllers configured to provide a pre-charging function for a capacitive load and to limit a pre-charging current upon connecting the load to a power source.

### BACKGROUND ART

Capacitive loads draw a high inrush-current when initially connected to a power source, for example, a battery. In the framework of the present disclosure, "capacitive loads" mean any loads that are characterized by an essential capacitive component. This may be, for instance, voltage-source power converters or, more specifically, motor drives of electrical machines. The inrush current may damage a connecting switch (power switch of a power controller) or inadvertently trigger fuses.

In addition, having in mind that, for example in the case of (aircraft) engines, load capacitors are connected to power controllers with long cables (for example, of approximately 3 to 6 meters, accordingly having a considerable inductance), the large current upon instant closing a power switch of a power controller may lead to voltage oscillations at the load. This may cause additional damages such as isolation breakdown or loads damages.

In view of the above, a controlled pre-charge with current limitation is required. Pre-charge here generally means a moderate ramp-up of the supply power and thus the charge formed at the capacitive load. Conventionally, several options to achieve inrush-current limitation are known.

For example, current limitation can be achieved by
- inserting resistive elements (either additional so-called pre-charge resistors or operating an existing semiconductor power switch in partially conductive state (linear mode)).
   This approach, however, has the drawback that it causes high power dissipation. Specifically, resistive elements dissipate the equal amount of energy that is transferred to the capacitive load. In addition, auxiliary pre-charge resistors may be bulky and add complexity to the circuit. Operating semiconductors in linear mode significantly limits the permitted charging current (specified safe-operating area). This extends the charge time and unavailability of the supplied function in the event of a power interruption. Further, thermal cycling of components may affect reliability.
- inserting additional inductive elements, to limit current rise.
   Additional inductors are also heavy and bulky and result in extra power dissipation as well.
- adding an isolated voltage regulator for pre-charge, for instance a DC/DC converter.
   This approach has the drawback that isolated voltage regulators for pre-charge are complex and expensive.
- modulating the power transfer with a power switch.
   A drawback of this approach is that modulating the power transfer causes power dissipation in the power switch. In addition, switching off inductive loads (for instance: connected by wiring) causes transient overvoltage (voltage overshoot) and oscillation at the power switch. In addition, fast switching of currents causes electromagnetic interference. Hence, an overall result of the modulation is switching losses.

### SUMMARY OF THE INVENTION

The present invention has been made to address the drawbacks of conventional approaches of inrush-current limitation discussed above and generally aims to provide an improved power controller with a current limiting function for pre-charging a capacitive load.

More specifically, the present invention aims to provide an inrush current limiting power controller operating on the basis of modulation controlled power transfer that addresses the above indicated drawbacks of modulated power transfer, and an operation method therefor.

This is achieved by the features of the independent claims.

According to a first aspect of the present invention, a power controller with the current limiting function for pre-charging a capacitive load is provided. The power controller comprises a power switch for being electrically coupled between a DC voltage source and the capacitive load and an anti-parallel diode electrically coupled anti-parallel to the current direction through the power switch from the DC voltage source to the capacitive load. The power controller further comprises resonant circuit elements connected to the power switch, so as to form a resonant tank and a modulation controller for modulating power transfer between the DC voltage source and the capacitive loads through the power switch, wherein the modulation controller is adapted to achieve a zero voltage switching condition for switching the power switch.

According to a second aspect of the present invention, an operating method for a power controller according to the first aspect of the present invention, for regulating and limiting power flow from the DC voltage source to the capacitive load is provided. The method comprises the steps of detecting a zero crossing of a current through the power switch from positive to negative, initiating a turn off of the power switch when the anti-parallel diode is forward biased, before the current would become positive again, so as to have a zero voltage switching condition, entering blocking state of the power switch when the current becomes zero again, and upon fulfilment of a predetermined reset condition, turning the power switch on again.

It is the particular approach of the present invention to limit the inrush-current in pre-charging a capacitive load by modulating the power transfer between the DC voltage source and the capacitive load by means of particular switching conditions so as to avoid, or at least considerably reduce, the above indicated drawbacks of the conventional modulation approach. In order to achieve this, a power controller according to the present invention is provided with resonant circuit elements forming a resonant tank and a modulation controller that controls a power switch electrically connected to the resonant circuit elements forming the resonant tank, so as to achieve a zero voltage switching (ZVS) condition, when the power switch is to be switched, in particular, switched off. Since switching under a ZVS condition is (ideally) lossless, this leads to a minimization of switching losses. "Resonant tank" (also called "resonant circuit") means a circuit, wherein resonant circuit elements (inductive and capacitive elements) are tuned to a certain resonance frequency.

According to embodiments, the power switch is a solid-state power switch, more specifically, a semiconductor switch. A power controller with a solid-state power switch is also known as SSPC (solid-state power controller). Known implementations of SSPCs include electronic fuses or circuit breakers.

In accordance with more specific embodiments, the solid-state power switch (semiconductor switch) is a MOSFET, wherein the internal body diode of the MOSFET functions as the anti-parallel diode. Alternatively, in case of other power switches such as Insulated Bipolar Gate Transistors (IGBT) not having an internal body diode, an anti-parallel diode as a dedicated separate element connected in parallel to the power switch can be used.

In embodiments, the resonant circuit elements are arranged in series. More specifically, the resonant circuit elements are arranged in series with each other and with the power switch. Alternatively, the resonant tank can be realized in the form of various combinations of inductive and capacitive elements switched serially/in parallel with respect to each other and with the power switch.

More specifically, in embodiments with serially arranged circuit elements, the resonant tank is formed with an inductance that is electrically coupled between the first terminal of the DC voltage source and a first terminal of the power switch and a capacitance that is electrically coupled between a second terminal of the power switch and a second terminal of the DC voltage source. Still more specifically, the inductance is at least partially formed by an inductance of the cabling between the DC voltage source and the power switch. In embodiments, the power controller further comprises a freewheeling diode that is electrically connected in parallel to the capacitance of the resonant tank, for allowing a load side current circulation with the power switch turned off.

In embodiments, the modulation controller is further adapted to achieve a zero current switching condition for the power switch to enter blocking state. Hence, build-up of a blocking voltage can be achieved in a lossless manner.

In embodiments, the modulation controller comprises a zero crossing detector, an RS latch, a driving circuit of the power switch connected to an inverting output of the RS latch, and a reset circuit. The zero crossing detector is connected to the set input of the RS latch and the reset circuit is connected to the reset input of the RS latch.

According to specific embodiments, the reset circuit comprises a fixed frequency pulse generator. Further, in accordance with specific embodiments, the reset circuit comprises a counter. Still further, in accordance with specific embodiments, the reset circuit comprises a load current regulator.

In accordance with a further particular aspect of the present invention, an aircraft electrical network is provided. The aircraft electrical network includes a DC voltage source, a power controller according to the first aspect of the present invention or any of its embodiments, and a capacitive load.

In accordance with a still further particular aspect of the present invention, an aircraft with electrical propulsion, comprising an aircraft electrical network according to the above further particular aspect is provided. Specifically, in embodiments, the DC voltage source as a battery and the capacitive load is a drive inverter of an electrical machine.

In embodiments, the aircraft is an electric vertical take-off and landing aircraft, eVTOL.

Further features and advantages of the present invention are set forth in dependent claims.

Embodiments and features of the present invention, herein described or set forth in the appended claims, may be combined unless it is obvious from the context that such a combination is not possible for particular embodiments or features.

### BRIEF DESCRIPTION OF THE DRAWINGS

Additional features and advantages of the present invention will become apparent in the following and more particular description as illustrated in the accompanying drawings, wherein:
- Fig. 1: is a scheme showing a connection of a power source to a capacitive load via a power controller according to embodiments of the present invention including a resonant tank with elements connected in series;
- Fig. 2: is a scheme showing a connection of a power source to a capacitive load via power controller according to alternative embodiments of the present invention including the resonant tank in series - parallel connection with a power switch;
- Fig. 3: schematically illustrates a process of charging the resonant tank capacitor in a power controller as illustrated in the scheme of Fig. 1;
- Fig. 4: schematically illustrates a process of discharging the resonant tank capacitor in a power controller as illustrated in the scheme of Fig. 1;
- Fig. 5: schematically illustrates a process of freewheeling, during the power switch being switched off, in a power controller as illustrated in the scheme of Fig. 1;
- Fig. 6: illustrates an example of operating a modulation controller with fixed frequency reset;
- Fig. 7: illustrates an example of operating a reset circuit of a modulation controller including a load current controller;
- Fig. 8: illustrates an exemplary behavior of power switch voltage and current over time;
- Fig. 9: illustrates an exemplary behavior of capacitive load voltage and current over time;
- Fig. 10: illustrates an exemplary behavior of the voltage at the resonant tank capacitor and the current at the resonant tank inductor over time, in a power controller as illustrated in the scheme of Fig. 1; and
- Fig. 11: is a flowchart illustrating an exemplary method of operating a power controller in accordance with embodiments of the present invention.

### DETAILED DESCRIPTION

The following description of particular embodiments serves for a more detailed explanation of the principles underlying the present invention. However, any details provided in the detailed description serve for illustration by means of example only and are not intended to limit the invention that is defined by the appended claims.

As indicated above, the present invention generally further develops the concept of limiting the inrush-current by modulating the power transfer.

In accordance with the present invention, a power controller is used, wherein a power switch (for example: a MOSFET) is combined with additional resonant circuit elements (inductors and capacitors) forming a resonant circuit (resonant tank). A modulation controller is specifically arranged so as to achieve a zero voltage switching condition when controlling the power switch connected to the resonant tank.

Specifically, for this purpose, the power switch is controlled to turn off the inrush-current to modulate the power transfer, when an anti-parallel diode (for example: the intrinsic body diode of the MOSFET) is forward-biased. With the anti-parallel diode forward biased, the voltage across the power switch is close to zero (so-called zero voltage switching) and the occurring switching loss is thus reduced to a minimal value, ideally zero.

In this connection, it is noted that having in mind that the ideal case of zero switching conditions is often not completely achieved in practical implementations, throughout the present disclosure the term "zero voltage switching" is used not only for switching under no-voltage conditions but includes also the case of switching with very little remaining voltage, i.e. the voltage is assumed to be much lower than a nominal voltage of the circuit concerned, in the present case, for instance, the voltage of the power source. In particular, a ZVS is considered to prevail when the voltage during this switching process is only a few percent of the nominal voltage of the circuit. Analogous considerations hold for the zero current switching (ZCS) condition that will be discussed below. A ZCS condition is considered to be fulfilled when there is a remaining current of only a small percentage of (i.e. is one or more orders of magnitude lower than) a nominal current in the circuit rather than only when the current is exactly zero.

Having in mind that the power is defined as a product of current and voltage, under such conditions the power dissipation in the switch is low and consequently the charging of the load can happen at a high average current to reduce charge time.

The inductance required for the resonant circuit can be partially or completely formed by the existing wiring from the power source to the switch, depending on the particular implementation. If this is not sufficient for forming the resonant tank, a dedicated inductor may be alternatively or additionally used. As will be detailed below, modulation control can be done in simple digital logic.

Further, reduced power dissipation can result in employing smaller components with less weight. The reliability of the components may be enhanced if thermal cycling is reduced. The cost for additional components for the resonant circuit elements is small since in many cases only a single additional capacitor is required.

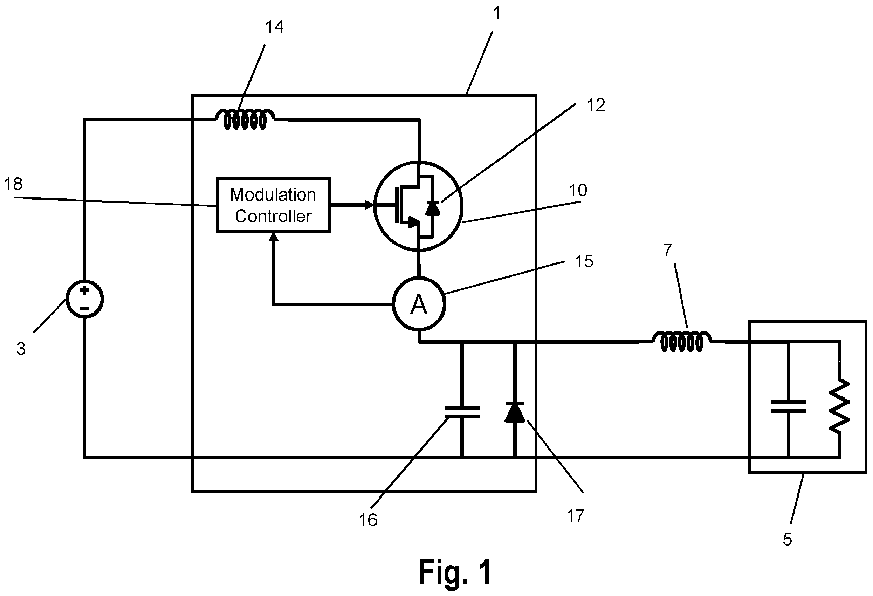

Fig. 1 illustrates an example of an inrush-current limiting circuitry with power modulation using a power controller 1 according to a preferred embodiment of the present invention.

A power source (battery) 3 is connected via power controller 1 to a capacitive load 5 (here illustrated schematically by a parallel assembly of a capacitor and a resistor). Power controller 1 comprises a power switch 10 (here: a MOSFET having an intrinsic body diode 12 operating as the anti-parallel diode of the power controller) and a current detector 15 for detecting a current through the power switch. As indicated above, the present invention is not limited to such an arrangement but a dedicated anti-parallel diode connected in parallel to the power switch can be used instead of the intrinsic body diode and thus the power switch is not limited to a MOSFET or generally to a semiconductor switch at all. The power controller further comprises an additional resonant tank which is here formed by an inductor 14 connected in series between the power switch (a first terminal; here: drain) and a first terminal (here: plus) of the battery and a capacitor 16 connected in series between the power switch (a second terminal; here: source) and a second terminal (here: minus) of the battery. As illustrated, in the given implementation the inductor 14 is formed by the wiring between the power source and the power switch, without the invention being limited thereto. A further inductance 7, not forming part of the power controller/the resonant tank, is formed by the wiring between the power controller and the capacitive load 5. The power controller further comprises modulation controller 18 that is arranged to receive a detected current as an input from current detector 15. In another embodiment the current can also be estimated from a measured voltage drop across the power switch 10. The modulation controller 18performs control of the power switch 10 by means of applying an appropriate control voltage at a control terminal of the power switch 10 (here: a control voltage at the gate of the MOSFET). In the present embodiment, the power controller 1 further comprises a freewheeling diode 17 that is connected in parallel to capacitor 16 (here: in anti-parallel direction with respect to a current flow from the positive to the negative terminal of power source 3). The invention is not limited to the existence of this diode, a freewheeling diode is usually required if the wiring between power controller 1 and the capacitive 5 has a significant inductance.

It is noted that a conventional modulation controlled inrush-current limiter may be realized with a similar scheme, without, however, the additional resonant tank. In that case, when the power switch (semiconductor switch) 10 is closed and current flows from the source 3 to the load 5 and charges the load capacitor. When the inrush-current reaches a defined threshold, the power switch 10 is opened and the current flow from the power source 3 to the load 5 stops. In that case, the load current that flows through an inductive wiring element (7) can circulate through the freewheeling diode 17. Once the load current falls below a defined threshold, the semiconductor switch 10 is closed again, allowing for current flow from source 3 to load 5. This power modulation repeats until the capacitive load is fully charged and the semiconductor switch 10 is permanently closed.

An essential new element of the present invention is the resonant tank (14, 16). Together with a dedicated operation by the modulation controller 18, the present invention achieves a power modulation regime reducing the side-effects leading to the drawbacks of the conventional power modulation scheme discussed above.

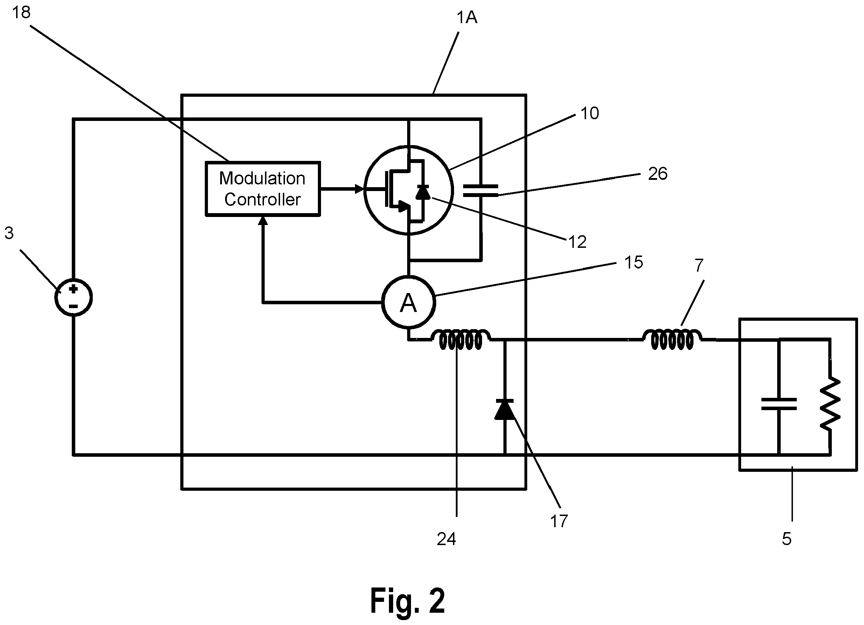

Fig. 2 shows an alternative embodiment of a power controller 1A. Elements which are the same as in the embodiment illustrated in Fig. 1 are designated with the same reference numerals and repeated description thereof will be herein omitted.

Same as in Fig. 1, power controller 1A connects between power source 3 and capacitive load 5. A difference resides in the arrangement of the resonant elements forming the resonant tank. An inductive element 24 is connected in series to power switch 10 at an output terminal of power controller 1A towards load 5. A capacitive element 26 is connected in parallel to power switch 10.

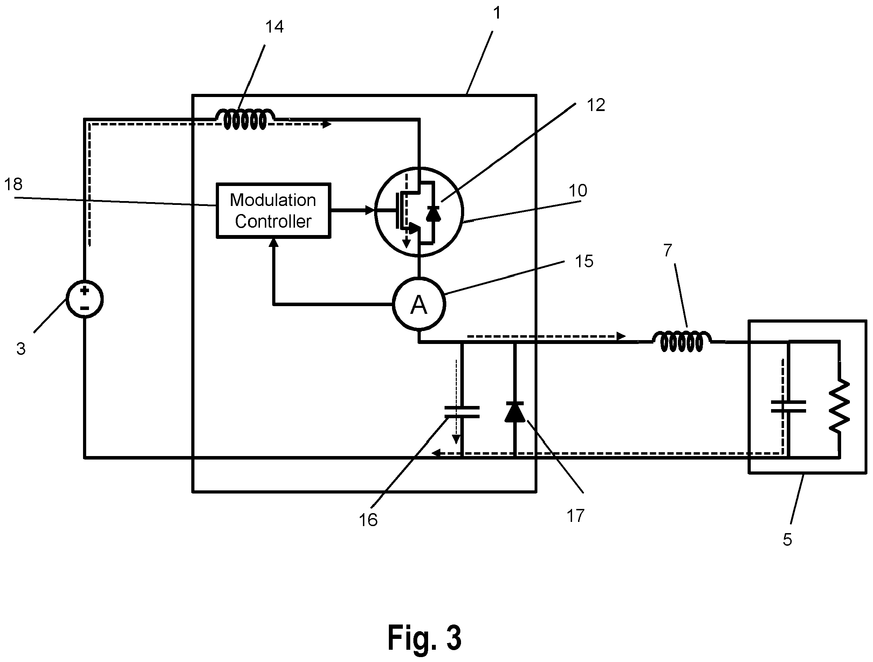

In the following, operation details of a power controller according to the present invention will be described with reference to the drawings of Figs. 3 to 5. As can be seen therefrom, by way of example, the detailed scheme generally illustrated in Fig. 1 will be used for the illustration. However, the present invention is not limited to this and schemes, for instance, according to Fig. 2 or any other suitable implementation of a resonant tank can be equally used.

Fig. 3 illustrates circuit operation during an initial phase, during which resonant capacitor 16 is charged.

When the power switch 10 is initially closed, a current through the source side wiring charges resonant capacitor 16 as well as the load capacitor. The source side wiring inductance 14 limits the current slope by a voltage opposed to current change (*v_{L}* = *L di*/*dt).* Once the resonant tank capacitor is charged to the supply voltage, the inrush-current decreases and the voltage across the source side inductor 14 becomes negative. The negative voltage across the source side inductor 14 allows the resonant capacitor 16 to be charged to twice the source voltage.

The current flow during this phase is indicated by means of dashed lines with arrows in Fig. 3.

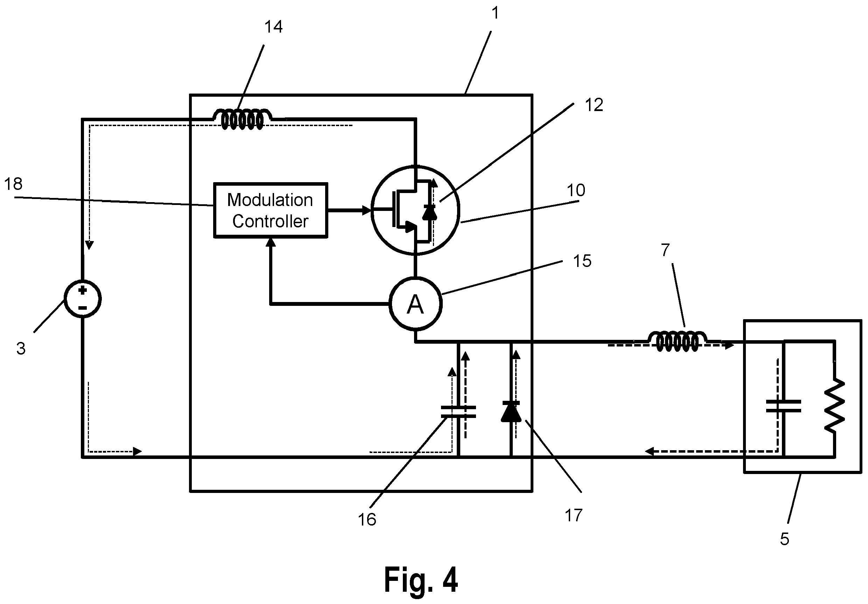

Fig. 4 illustrates circuit operation during a phase, when resonant capacitor 16 is discharged.

Once the resonant tank capacitor 16 is fully charged to twice the supply voltage, the current flow reverses and discharge of the resonant tank capacitor 16 starts. A part of the charge flows through the anti-parallel diode 12 (in the illustrated example: the intrinsic body diode of the MOSFET) back into the power source 3. Most of the charge is transferred to the load capacitor.

The current flow during this phase is indicated by means of dashed lines with arrows in Fig. 4.

When diode 12 is forward-biased, power switch 10 can be turned off without the formation of a blocking voltage. Here, the diode 12 is forward-biased in view of the current flowing back into the source 3. Because of the absence of voltage, this means that the zero voltage switching (ZVS) condition has been reached. More particularly, there is of course a low voltage due to the current flow through the body diode (i.e. the above identified forward bias). However, under practical conditions this voltage is very low (for example, in the order of a few Volts, such as 1.7 Volts, in a system with a power source voltage in the range of 1000 Volts). As indicated above, the term "zero voltage switching condition" as used in the present disclosure covers such a practically achieved case, wherein a voltage at the switch is not exactly zero but one or more orders of magnitude lower than a nominal voltage of the circuit such as the power source voltage. In other words, the switching power dissipation, if not exactly zero, is nevertheless reduced considerably.

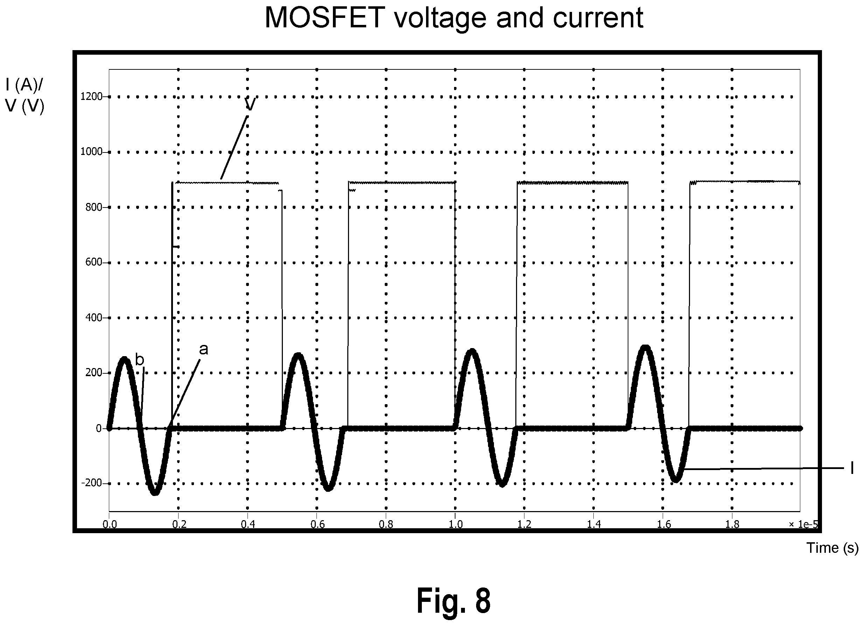

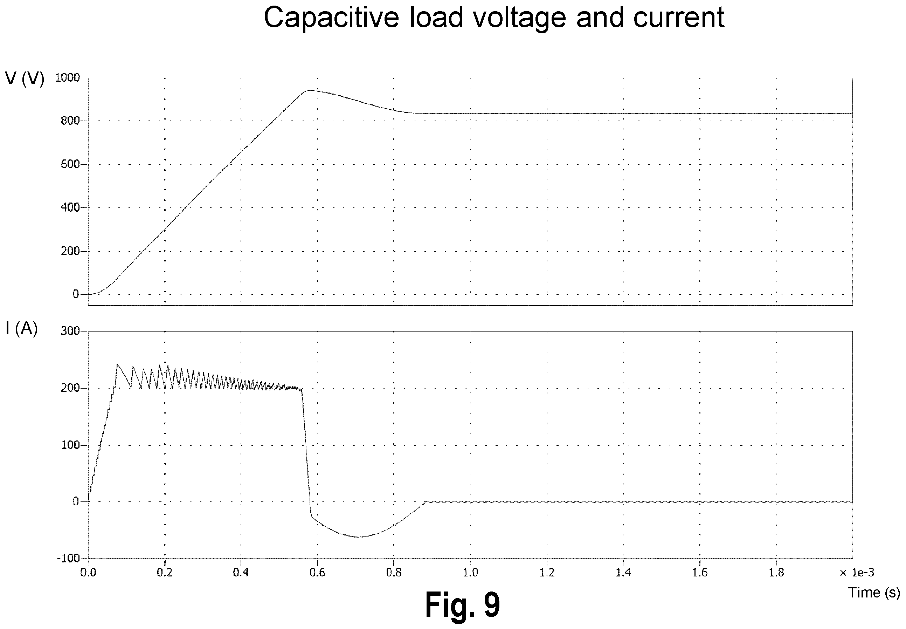

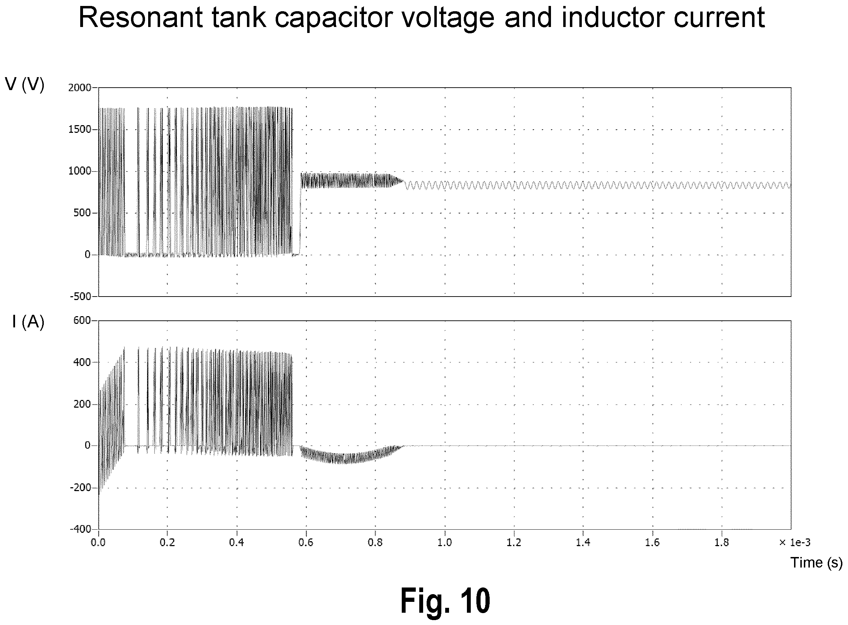

Example switching curves (upper (thin) curve: voltage V (in Volt (V)) and lower (bold) curve: current I (in Ampere (A))) over time (in seconds (s)) are illustrated in Fig. 8, which is based on a simulation as described below with reference to Figs. 9 and 10. As can be seen therefrom, and in compliance with what is described above, the current initially rises and then decreases (positive half-wave in the drawing) and reverts its direction (negative half-wave in the drawing). In this situation, the anti-parallel diode 12 is forward-biased. As explained, in this situation the power switch 10 is switched off under ZVS condition since the voltage is (practically) zero. Once the resonant current comes to zero again, now from the negative side, the power switch 10 enters a blocking state (at a point designated "a" in the drawing). Since the build-up of the blocking voltage happens when the current passes through zero, this is called "zero current switching (ZCS)". Again, the power dissipation is close to zero. Practically, a reduction of switching loss of 90% or more can be reached. As usual, designations like "1e-5" etc. in Figs. 8 to 10 mean "10⁻⁵" etc.

In order to implement the turn-off ZVS condition, the modulation controller 18 is configured to detect the zero-crossing of the current from positive to negative (at a point designated "b" in the drawing) and initiate turn-off before the current becomes positive again (at point a in the drawing).

Upon a reset, after a certain time which will be discussed in more detail below, the above-described process periodically repeats (until the load capacitance is fully charged, as can be seen from Fig. 8).

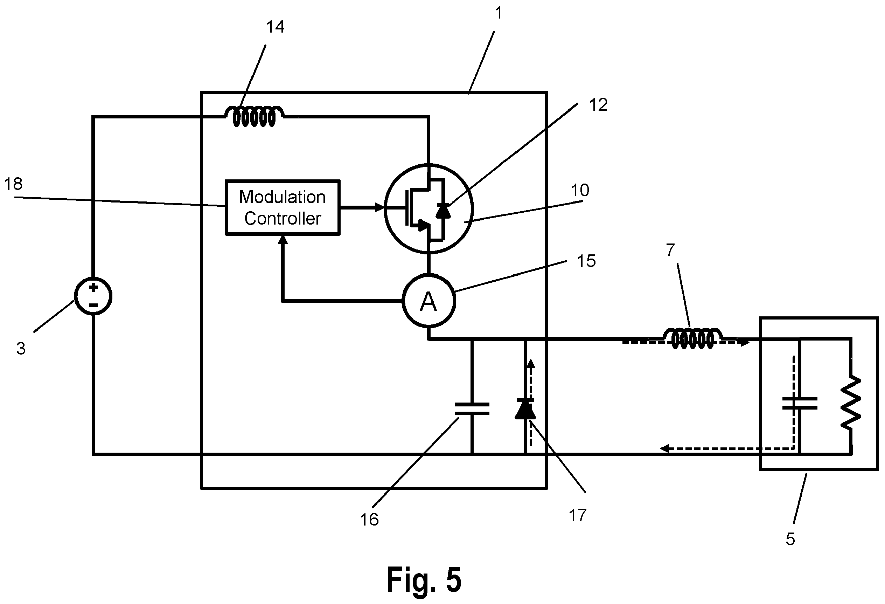

Finally, Fig. 5 illustrates a stage of freewheeling of an inductive load current. This situation specifically occurs if the load wiring inductance 7 is greater than the source - side inductance 14, which is, however, normally the case in practical implementations. The power controller is usually located close to the source, since one of its primary functions is the safe turn-off of short circuits in the wiring or the load.

The load-side current then continues to circulate through the freewheeling diode 17, as shown in Fig. 5. If the off-time of the semiconductor switch is chosen to allow for continuous current flow in the load-side, a significant current builds up that charges the load capacitor quickly. An efficient transfer of charge temporarily loaded to the resonant capacitor 16 to the capacitor of the load 5 is thereby achieved, and the resonant capacitor 16 gets discharged towards the capacitor of the load 5.

Again, the current flow during this stage is illustrated by means of dashed arrows in Fig. 5.

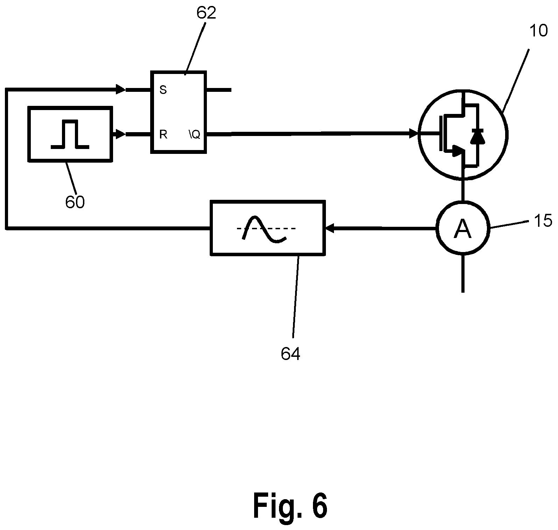

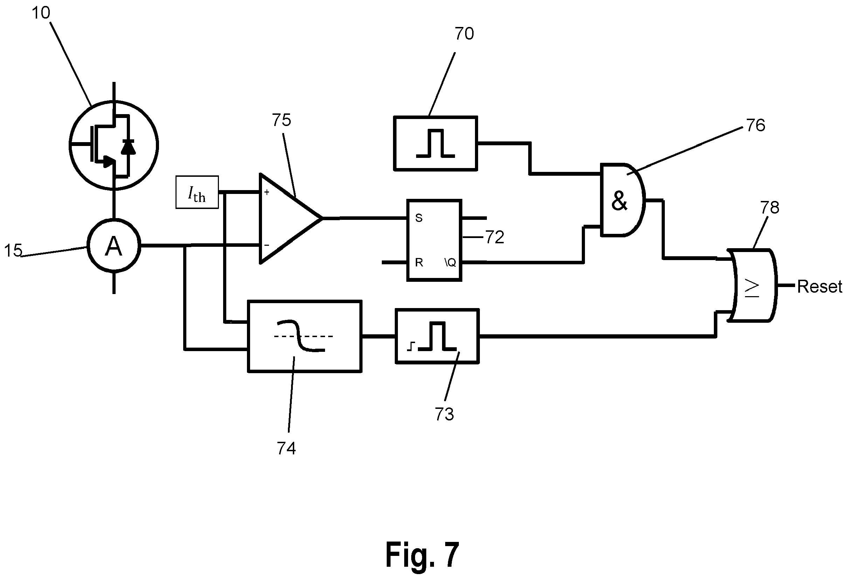

In the following, details of possible embodiments implementing modulation control will be described with reference to Figs. 6 and 7.

The modulation control by the modulation controller 18 is foreseen to ensure the zero-voltage switching of the power switch 10 and to regulate the inrush-current to the load 5.

For zero voltage switching the power switch 10 is turned off after the resonating current becomes negative, i.e. when the current can flow through the anti-parallel diode 12 (see negative half-wave between points a and b in Fig. 8).

A possible implementation is shown in Fig. 6. As can be seen therefrom, the modulation controller according to the embodiment comprises a reset circuit (in the illustrated case: a fixed frequency pulse generator 60), an RS latch 62, and a zero-crossing detection circuit 64.

The transition of the switch current (detected by current detector 15) from positive to negative is sensed by zero-crossing detection circuit 64. In its simplest implementation, this may for example be realized by means of a comparator. The output of zero-crossing detection circuit 64 is connected with the set input terminal (S) of RS latch 62, in order to set the RS latch. The inverting output of the RS latch (\Q) is connected to a control terminal (gate terminal) of power switch 10. In embodiments, there is a gate drive amplifier (not shown in the drawing) in-between the inverting output of the RS latch and the control terminal (gate). The gate drive amplifier controls the power switch 10 upon a signal output from the RS latch 62. After the RS latch 62 is set, the switch 10 is opened and the latch 62 needs to be reset to begin the next resonant cycle. For this purpose, the reset circuit is connected to the reset input terminal (R) of RS latch 62.

In the illustrated symbol embodiment, the reset circuit is a fixed frequency pulse generator 60. This results in a constant switching frequency of the power switch 10. However, the present invention is not limited to this case.

Another simple embodiment of the reset circuit (not shown in the drawings) is a counter that is started after opening of the power switch 10, resulting in a constant switch off-time.

A still further possible embodiment is a load current regulator. The reset signal is then generated if the load current falls below a defined load current threshold.

Fig. 7 shows a more complicated example of a reset circuit 60A. It is noted that Fig. 7, contrary to Fig. 6, shows no modulation controller but an alternative embodiment to the fixed frequency pulse generator 60 used as the reset circuit in Fig. 6 only. Hence, the output labeled "Reset" shown in Fig. 7 is foreseen to be connected to the reset input terminal (R) of RS latch 62 in Fig. 6.

Fig. 7 shows a reset circuit 60A that combines a fixed frequency pulse generator 70 that is active until a defined load current threshold is reached with a load current regulator. In this implementation, fixed-frequency modulator 70 controls the power switch 10 until the load current reaches a threshold ("set-point threshold") for the first time. Then the current regulator takes control.

This procedure is implemented with a comparator 75 comparing the load current (detected with current detector 15) to the set-point threshold (*Iₜₕ*). The output of comparator 75 is connected to a set input (S) of an RS latch 72 for setting RS latch 72. The inverting output (\Q) of RS latch 72 is connected to AND logic gate 76 that disables fixed-frequency modulator 70 if the current set-point threshold is reached for the first time. In the illustrated embodiment, the load current regulator comprises a threshold crossing detection circuit 74 (in its simplest implementation also a comparator) that is triggered when the load current falls below the set-point threshold. A monostable multivibrator (monoflop) 73 can generate a minimum time between reset pulses and thus limit the switching frequency of power switch 10. The reset signal is output through OR gate 78.

Fig. 9 shows simulation results (upper diagram: load voltage and lower diagram: load current) of a power controller including a modulation controller 18 having the structure as described with reference to Figs. 6 and 7 above.

A load capacitor of 120 µF (Microfarad) is charged to 890 V (Volt) in less than 0.6 ms (milliseconds). The load current does not exceed 250 A (Ampere). The zero-voltage switching eliminates switching loss and allows for a switching frequency of up to 200 kHz (Kilohertz). This reduces current ripple in the load current and thus the generated electro-magnetic interference.

The simulated resonant tank has an inductive element of 1 µH (Microhenry), which is assumed to be the wiring from the power source 3 to the power switch 10 and an 80 nF (Nanofarad) capacitor. Load side wiring is assumed to have an inductivity of 100 µH. The resonant capacitor and the freewheeling diode must be rated for double the power source voltage. Diodes and capacitors can be connected in series to achieve the higher voltage rating.

Fig. 10 shows the voltage (upper diagram) and current (lower diagram) at the semiconductor switch (power switch) 10. No inductive overshoot occurs during opening of the switch. The resonating current has an amplitude of approximately 200 A. The resonating current in this example has a frequency of approximately 570 kHz, which can be considered low in terms of radiated electromagnetic interference. The resonating current is supplied by the power source 3, i.e. for example, the battery. Several inrush-current limiter circuits can be operated interleaved to eliminate the resonating current in the load 5.

Of course, the indicated parameter values used for the exemplary simulation as shown in Figs. 9 and 10 are merely examples and the present invention is by no way limited to these or similar values. However, the values may give an idea of possible magnitudes of element and electrical characteristics with which the present invention can, for example, be implemented.

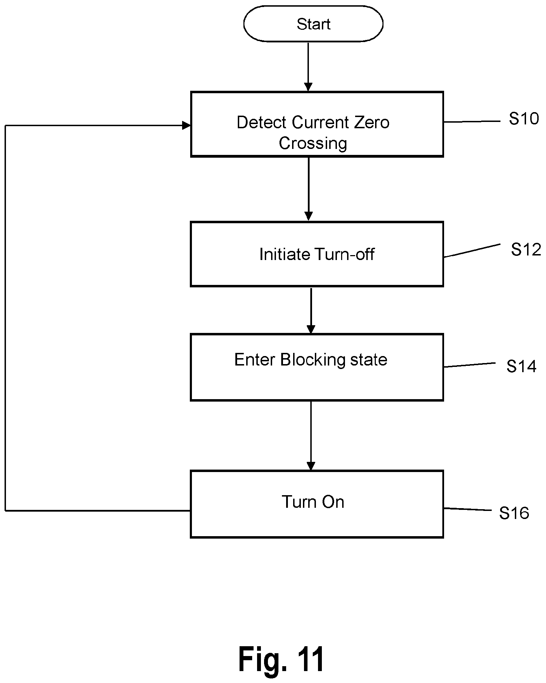

Fig. 11 is a flowchart showing the main operation steps of a power controller according to the present invention with a modulation controller as generally illustrated in Fig. 6.

After the power switch 10 has been initially switched on for connecting power source 3 and load 5, current is monitored by current detector 15 and the (initial) zero crossing of the current (from positive to negative, corresponding to point b in Fig. 8) is detected at step S10.

At this moment, reverse current flow starts through the anti-parallel diode 12 and switching of power switch 10 under a zero voltage switching condition becomes possible. Therefore, turn off of power switch 10 is now initiated (step S12).

When the current reaches zero again (from the negative, point a in Fig. 8), a blocking state is entered, meaning that a respective blocking voltage has been built up at the switch 10 (step S14).

Upon fulfilment of a predetermined reset condition, at step S16, power switch 10 is turned on again and the illustrated processing repeats periodically, until the capacitor of capacitive load 5 is fully charged. As described in more detail in connection with Figs. 6 and 7 above, the reset condition can be implemented in various ways, including reset at a fixed frequency, as well as more sophisticated approaches.

Summarizing, the present invention relates to a power controller with a current limiting function for pre-charging a capacitive load, wherein current limitation is implemented by means of power transfer modulation control under specific switching conditions. Specifically, by use of resonant circuit elements (resonant tank) and an accordingly adapted modulation controller, a zero-voltage switching condition (ZVS) when modulating the power transfer is achieved. This results in low power dissipation and little electromagnetic interference. Therefore, a capacitive load can be charged faster and with less power dissipation than in conventional approaches.

## Claims

1. A power controller with a current limiting function for pre-charging a capacitive load (5), the power controller comprising
a power switch (10), for being electrically coupled between a DC voltage source (3) and said capacitive load (5),
an anti-parallel diode (12) electrically coupled anti-parallel to the current direction through the power switch (10) from the DC voltage source (3) to the capacitive load (5),
resonant circuit elements (14, 16; 24, 26) connected to the power switch (10), so as to form a resonant tank, and
a modulation controller (18) for modulating power transfer between said DC voltage source (3) and said capacitive load (5) through said power switch (10), the modulation controller (18) being adapted to achieve a zero voltage switching condition for switching the power switch (10).

2. A power controller according to claim 1, wherein the power switch (10) is a solid state power switch.

3. A power controller according to claim 2, wherein the solid state power switch (10) is a MOSFET, and the anti-parallel diode (12) is the internal body diode of the MOSFET.

4. A power controller according to any of claims 1 to 3, wherein the resonant circuit elements (14, 16) are arranged in series.

5. A power controller according to claim 4, wherein the resonant circuit elements (14, 16) forming the resonant tank comprising an inductance (14) for being electrically coupled between a first terminal of the DC voltage source (3) and a first terminal of the power switch (10) and a capacitance (16) for being electrically coupled between a second terminal of the power switch (10) and a second terminal of the DC voltage source (3).

6. A power controller according to claim 5, wherein said inductance (14) being at least in part formed by an inductance of the cabling between the DC voltage source (3) and the power switch (10).

7. A power controller according to claim 5 or 6, further comprising a freewheeling diode (17) parallel to the capacitance (16) of the resonant tank, for allowing a load side current circulation when the power switch (10) is turned off.

8. A power controller according to any of claims 1 to 7, wherein the modulation controller (18) is further adapted to achieve a zero current switching condition for the power switch (10) to enter blocking state.

9. A power controller according to any of claims 1 to 8, wherein the modulation controller (18) comprises a zero crossing detector (64), an RS latch (62), a driving circuit of the power switch connected to an inverting output of the RS latch (62), and a reset circuit (60; 60A), the zero crossing detector (64) being connected to the set input of the RS latch (62) and the reset circuit (60, 60A) being connected to the reset input of the RS latch (62).

10. A power controller according to claim 9, wherein the reset circuit (60; 60A) comprises a fixed frequency pulse generator (60; 70).

11. A power controller according to claim 9 or 10, wherein the reset circuit comprises a counter.

12. A power controller according to any of claims 9 to 11, wherein the reset circuit (60A) comprises a load current regulator (74, 75).

13. An aircraft electrical network including
a DC voltage source (3),
a power controller (1; 1A) according to any of claims 1 to 12, and
a capacitive load (5).

14. An aircraft with electrical propulsion comprising an aircraft electrical network according to claim 13, with the DC voltage source (3) being a battery and the capacitive load (5) being a drive inverter of an electrical machine.

15. A operating method for a power controller (1; 1A) according to any of claims 1 to 12, for regulating and limiting power flow from the DC voltage source (3) to the capacitive load (5), the method comprising the steps of
detecting (S10) a zero crossing of a current through the power switch (10) from positive to negative,
initiating (S12) a turn off of the power switch (10) when the anti-parallel diode (12) is forward biased, before the current would become positive again, so as to have a zero voltage switching condition,
entering (S14) blocking state of the power switch (10) when the current becomes zero again, and
upon fulfilment of a predetermined reset condition, turning (S16) the power switch (10) on again.
